# EUROPEAN PATENT SPECIFICATION

(11) **EP 4 543 793 B1**
(45) Date of publication and mention of the grant of the patent: **22.10.2025**
(21) Application number: 22741431.5
(22) Date of filing: 21.06.2022
(51) Int. Cl.: B66B 1/34, B66B 5/00, H04N 23/60, G06V 20/52

(54) **A METHOD AND A TRIGGERING SYSTEM FOR TRIGGERING AN ACQUISITION OF IMAGE DATA OF AN EMPTY ELEVATOR CAR**
VERFAHREN UND AUSLÖSESYSTEM ZUM AUSLÖSEN EINER ERFASSUNG VON BILDDATEN EINER LEEREN AUFZUGSKABINE
PROCÉDÉ ET SYSTÈME DE DÉCLENCHEMENT POUR DÉCLENCHER UNE ACQUISITION DE DONNÉES D'IMAGE D'UNE CABINE D'ASCENSEUR VIDE

(43) Date of publication of application: 30.04.2025
(73) Proprietor: KONE Corporation, 00330 Helsinki (FI)
(72) Inventor: SUN, Qiang, Kunshan, Jiangsu 215300 (CN); LU, Yong Qing, Kunshan, Jiangsu 215300 (CN); RAITOLA, Pasi, 00330 Helsinki (FI); ZAKRZEWSKI, Mari, 00330 Helsinki (FI); PITKÄNEN, Ari, 00330 Helsinki (FI)
(74) Representative: Berggren Oy
(86) International application number: PCT/CN2022/100030
(87) International publication number: WO 2023/245402

(56) References cited:
- WO-A1-2019/052318
- US-A1- 2006 037 818
- US-A1- 2016 292 521

## Description

### TECHNICAL FIELD

The invention concerns in general the technical field of elevators. Especially the invention concerns obtaining elevator related data of elevator cars.

### BACKGROUND

A baseline image of an empty elevator car may typically be needed in image analysis -based detection solutions of elevator systems. For example, a fill level of an elevator car may be defined by comparing an image difference between an image of the interior of the elevator car, when the elevator car is assumed to be filled with passengers and/or load, and the baseline image. The accuracy of the image analysis -based detection solutions may be dependent on the baseline image. For example, if the floor of the elevator car changes, e.g. due to a new carpet, a new floor material, wear of a carpet, wear of a floor material, or fading of color of the floor, etc., the accuracy of the image analysis -based detection solution may decrease and thus the detection result will be impacted. Therefore, the baseline image is required to be kept up to date. US 2016/292521 A1 discloses the preamble of the independent claims 1 and 8 and discloses a system for automatically capturing images of the elevator interior using a camera mounted in the elevator car. The image is used for monitoring cleanliness and object detection, triggered periodically or on specific events, but not conditionally on the elevator being empty and closed.

### SUMMARY

The following presents a simplified summary in order to provide basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

An objective of the invention is to present a method, a triggering system, and an elevator system for triggering an acquisition of image data of an empty elevator car. Another objective of the invention is that the method, the triggering system, and the elevator system for triggering an acquisition of image data of an empty elevator car enables defining an appropriate time for triggering the acquisition of image data of the empty elevator car.

The objectives of the invention are reached by a method, a triggering system, and an elevator system as defined by the respective independent claims.

According to a first aspect, a method for triggering an acquisition of image data of an empty elevator car is provided, wherein the method comprises: obtaining door status data representing a status of the door of the elevator car, obtaining occupancy status data representing an occupancy status of the elevator car, detecting based on the obtained door status data that the door of the elevator car is closed, detecting based on the obtained occupancy status data that the elevator car is empty, and generating a control signal to an imaging device arranged inside the elevator car in response to the detecting that the door of the elevator car is closed and the elevator car is empty, wherein the control signal comprises an instruction to trigger the acquisition of the image data of the empty elevator car.

The door status data may be obtained from a first sensor device being an acceleration sensor device arranged to the elevator car, and wherein the door status data may comprise acceleration of the elevator car or deceleration of the elevator car.

The detecting that the door of the elevator car is closed may comprise: detecting an acceleration phase of an elevator ride of the elevator car based on the acceleration of the elevator car, wherein the detection of the acceleration phase of the elevator car indicates that the door of the elevator car is closed; or detecting a deceleration phase of the elevator ride of the elevator car based on the deceleration of the elevator car, wherein the detection of the deceleration phase of the elevator car indicates that the door of the elevator car is closed.

Alternatively, the detecting that the door of the elevator car is closed may comprise detecting a constant velocity phase of an elevator ride of the elevator car based on the acceleration of the elevator car or the deceleration of the elevator car, wherein the detection of the constant velocity phase of the elevator car indicates that the door of the elevator car is closed.

The occupancy status data may be obtained from a second sensor device being a Time-of-Flight (ToF) sensor device arranged inside the elevator car, and wherein the occupancy status data may comprise distance data.

The detecting that the elevator car is empty may comprise detecting based on the distance data whether there are any objects inside the elevator car or not, wherein the detection that there are no objects inside the elevator car indicates that the elevator car is empty.

In addition, the method may further comprise: receiving the acquired image data of the empty elevator car, and updating a baseline image of an image analysis -based detection algorithm based on the received image data.

According to a second aspect, a triggering system for triggering an acquisition of image data of an empty elevator car is provided, wherein the triggering system comprises: a first sensor device configured to provide door status data representing a status of the door of the elevator car, a second sensor device configured to provide occupancy status data representing occupancy status of the elevator car, an imaging device arranged inside the elevator car and configured to acquire image data of the interior of the elevator car, and a control unit configured to: obtain the door status data from the first sensor device, obtaining the occupancy status data from the second sensor device, detect based on the obtained door status data that the door of the elevator car is closed, detect based on the obtained occupancy status data that the elevator car is empty, and generate a control signal to the imaging device in response to the detecting that the door of the elevator car is closed and the elevator car is empty, wherein the control signal comprises an instruction to trigger the acquisition of the image data of the empty elevator car.

The first sensor device may be an acceleration sensor device arranged to the elevator car, and wherein the door status data may comprise acceleration of the elevator car or deceleration of the elevator car.

The detecting that the door of the elevator car is closed may comprise that the control unit is configured to: detect an acceleration phase of an elevator ride of the elevator car based on the acceleration of the elevator car, wherein the detection of the acceleration phase of the elevator car indicates that the door of the elevator car is closed; or detect a deceleration phase of the elevator ride of the elevator car based on the deceleration of the elevator car, wherein the detection of the deceleration phase of the elevator car indicates that the door of the elevator car is closed.

Alternatively, the detecting that the door of the elevator car is closed may comprise that the control unit is configured to: detect a constant velocity phase of an elevator ride of the elevator car based on the acceleration of the elevator car or the deceleration of the elevator car, wherein the detection of the constant velocity phase of the elevator car indicates that the door of the elevator car is closed.

The second sensor device may be a Time-of-Flight (ToF) sensor device arranged inside the elevator car, and wherein the occupancy status data may comprise distance data.

The detecting that the elevator car is empty may comprise that the control unit is configured to detect based on the distance data whether there are any objects inside the elevator car or not, wherein the detection that there are no objects inside the elevator car indicates that the elevator car is empty.

In addition, the control unit may further be configured to: receive the acquired image data of the empty elevator car from the imaging device, and update a baseline image of an image analysis -based detection algorithm based on the received image data.

According to a third aspect, an elevator system is provided, wherein the elevator system comprises: at least one elevator car configured to travel along a respective elevator shaft, and a triggering system as described above.

Various exemplifying and non-limiting embodiments of the invention both as to constructions and to methods of operation, together with additional objects and advantages thereof, will be best understood from the following description of specific exemplifying and non-limiting embodiments when read in connection with the accompanying drawings.

The verbs "to comprise" and "to include" are used in this document as open limitations that neither exclude nor require the existence of unrecited features. The features recited in dependent claims are mutually freely combinable unless otherwise explicitly stated. Furthermore, it is to be understood that the use of "a" or "an", i.e. a singular form, throughout this document does not exclude a plurality.

### BRIEF DESCRIPTION OF THE DRAWINGS

The embodiments of the invention are illustrated by way of example, and not by way of limitation, in the figures of the accompanying drawings.
Figure 1 illustrates schematically an example of an elevator system.
Figure 2A illustrates schematically an example of a triggering system for triggering an acquisition of image data of an empty elevator car.
Figure 2B illustrates schematically an example implementation of a triggering system for triggering an acquisition of image data of an empty elevator car in an elevator system.
Figure 3 illustrates schematically an example of a method for triggering an acquisition of image data of an empty elevator car.
Figure 4 illustrates schematically an example of components of a control unit of a triggering system.

### DETAILED DESCRIPTION

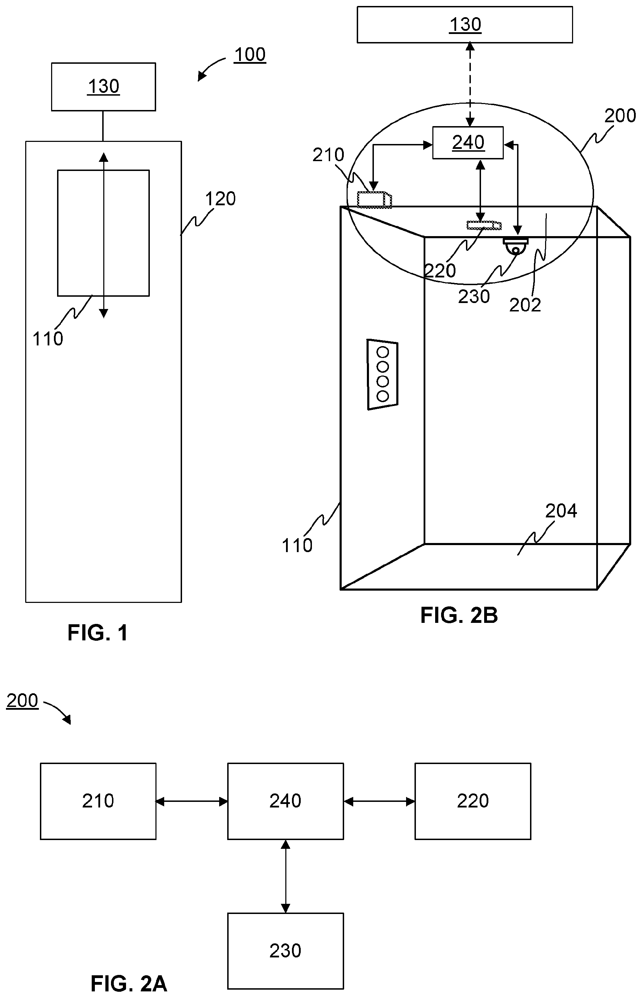

Figure 1 illustrates schematically an example of an elevator system 100. The elevator system 100 comprises at least one elevator car 110 configured to travel along a respective elevator shaft 120 between a plurality of landings. The elevator system 100 of the example of Figure 1 comprises one elevator car 110 travelling along one elevator shaft 120, however the elevator system 100 may also comprise an elevator group, i.e. group of two or more elevator cars 110 each travelling along a separate elevator shaft 120 configured to operate as a unit serving the same landings (for sake of clarity the plurality of landings are not illustrated in Figure 1). The elevator system 100 further comprises an elevator control system, e.g. an elevator controller, 130. The elevator control system 130 may be configured to control the operation of the elevator system 100 at least in part. The elevator control system 130 may reside e.g. in a machine room (for sake of clarity not shown in Figure 1) or in one of the landings of the elevator system 100. The elevator system 100 may further comprise one or more other known elevator related entities, e.g. hoisting system, user interface devices, safety circuit and devices, elevator door system, etc., which are not shown in Figure 1 for sake of clarity. The elevator system 100 further comprises a triggering system 200 for triggering an acquisition of image data of an empty elevator car 110 (for sake of clarity entities of the triggering system 200 are not shown in Figure 1).

Figure 2A illustrates schematically an example of the system triggering 200 for triggering the acquisition of image data of an empty elevator car 110. The triggering system 200 comprises a first sensor device 210, a second sensor device 220, an imaging device 230, and a control unit 240. The first sensor device 210, the second sensor device 220, and the imaging device 230 are communicatively coupled to the control unit 240. The communication between the control unit 240 and the other entities of the system 200 (i.e. the first sensor device 210, the second sensor device 220, and/or the imaging device 230) may be based on one or more known communication technologies, either wired or wireless. Figure 2B illustrates an example implementation of the triggering system 200 in the elevator system 100.

The first sensor device 210 is configured to provide door status data representing a status of the door of the elevator car 110 (for sake of clarity the door of the elevator car 110 is not shown in Figure 2B). The first sensor device 210 may for example be an acceleration sensor device. The first sensor device 210 being the acceleration sensor device may be arranged to the elevator car 110. For example, the acceleration sensor device 210 may be arranged on a rooftop of the elevator car 110 as illustrated in the example of Figure 2B. Alternatively, the acceleration sensor device 210 may be arranged to any other location in the elevator car 110 (either inside the elevator car 110 or outside the elevator car 110). Alternatively, the first sensor device may for example be a door sensor device. The first sensor device 210 being the door sensor device may for example be arranged to the door of the elevator car 110. For sake of clarity the door sensor device implementation of the first sensor device 210 is not illustrated in Figure 2B. Alternatively, the first sensor device 210 may for example be an elevator data acquisition device having a contact to elevator control signals of the elevator system 100. The elevator data acquisition device, e.g. data transfer unit (DTU), is configured to obtain different elevator related data including the door status data. For sake of clarity the elevator data acquisition device implementation of the first sensor device 210 is not illustrated in Figure 2B. Alternatively, the first sensor device 210 may be any other sensor device capable of providing the door status data.

The second sensor device 220 is configured to provide occupancy status data representing occupancy status of the elevator car 110. The second sensor device 220 may for example be a Time-of-Flight (ToF) sensor device. The second sensor device 220 being the ToF sensor device 220 may be arranged inside the elevator car 110. For example, the ToF sensor device 220 may for example be arranged to the ceiling 202 of the elevator car 110. Preferably, the ToF sensor device 220 may for example be arranged substantially in the middle of the ceiling 202 of the elevator car 110. This enables that occupancy status data provided by the ToF sensor device 220 may be provided from as maximum area of the elevator car 110 as possible. Preferably, the ToF sensor device 220 may be placed so that the occupancy status data provided by the ToF sensor device 220 is provided from at least the whole area of the floor 204 of the elevator car 110. In the example of Figure 2B, the ToF sensor device 220 is arranged substantially in the middle of the ceiling 202 of the elevator car 110, but the ToF sensor device 220 may also be arranged to any other point on the ceiling 202 of the elevator car 110.

The imaging device 230 is configured to acquire image data of the interior of the elevator car 110. The imaging device 230 may be arranged inside the elevator car 110. The image data provided by the imaging device 230 may comprise one or more images and/or video image comprising a plurality of consecutive images, i.e. frames. The imaging device 230 may be arranged (e.g. placed) at different placements inside the elevator car 110. Some non-limiting example placements of the imaging device 230 may comprise: a middle placement (e.g. the imaging device 230 may be placed in the middle placement), a corner placement (e.g. the imaging device 230 may be placed in the corner placement), and a ceiling placement (e.g. the imaging device 230 may be placed in the ceiling placement). For example, the middle placement may be at the middle of a back wall of the elevator car 110 in a horizontal direction as illustrated in the example of Figure 2B. Alternatively, the middle placement may be at the middle of any other wall of the elevator car 110 in a horizontal direction. For example, the corner placement may be at an upper back corner of the elevator car 110. The upper back corner of the elevator car 110 may be either one the upper back corners of the elevator car 110. Alternatively, the corner placement may be at an upper front corner of the elevator car 110. The upper front corner of the elevator car 110 may be either one the upper front corners of the elevator car 110. As illustrated in the example of Figure 2B, the imaging device 230 may preferably be placed in the vicinity of the ceiling 202 of the elevator car 110, i.e. as high as possible. The imaging device 230 may be placed so that the image data provided by the imaging device 230 covers as maximum area of the elevator car 110 as possible. Preferably, the imaging device 230 may be placed so that the image data provided by the imaging device 230 covers at least the floor 204 of the elevator car 110 completely. The imaging device 230 may for example comprise a camera, e.g. a Red-Green-Blue (RGB) camera or a black-and-white camera. The imaging device 230 may be capable of providing the image data with high resolution and/or a wide Field of View (FOV) to cover the maximum area of the elevator car 110 by the image data.

The control unit 240 may be configured to control one or more operations of the triggering system 200 at least in part. The control unit 240 may be arranged to the elevator car 110 (e.g. on a rooftop of the elevator car 110 or to any other location in the elevator car 110, either inside the elevator car 110 or outside the elevator car 110), any on-site location in the elevator system 100, or any off-site location being remote to the elevator system 100 (e.g. the control unit 240 may be implemented as a remote control unit, a cloud -based control unit, or any other off-site control unit). The control unit 240 may be communicatively coupled to the elevator control system 130 of the elevator system 100. The communication between the control unit 240 and the elevator control system 130 may be based on one or more known communication technologies, either wired or wireless.

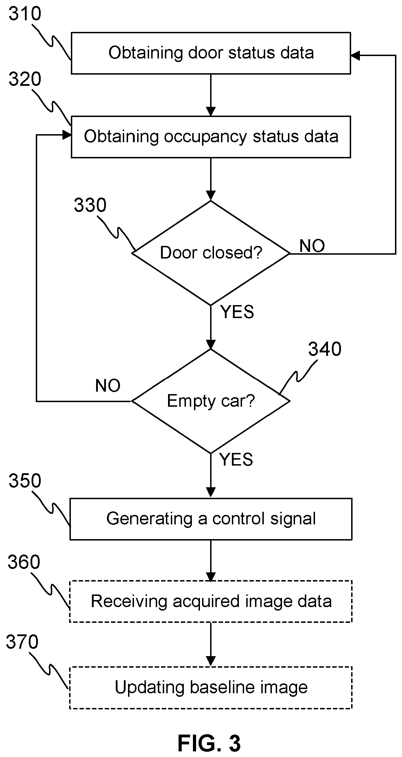

Next an example of a method for triggering an acquisition of image data of an empty elevator car 110 is described by referring to Figure 3. Figure 3 schematically illustrates the method as a flow chart.

At a step 310, the control unit 240 obtains door status data representing a status of the door of the elevator car 110. The status of the door of the elevator car 110 may for example be closed, open, closing, or opening. The control unit 240 may obtain the door status data from the first sensor device 210. As discussed above the first sensor device 210 may be the acceleration sensor device. The door status data obtained from the acceleration sensor device 210 may comprise acceleration of the elevator car 110 or deceleration of the elevator car 110. Alternatively, as also discussed above, the first sensor device 210 may be the door sensor device or the elevator data acquisition device. The door status data obtained from the door sensor device or the elevator data acquisition device may comprise the status of the door. The obtaining the door status data with another sensor device than the imaging device 230 itself enables that the FOV of the imaging device 230 does not necessarily need to cover the door the elevator car 110. This enables a narrower FOV, which in turn enables use of cheaper imaging device 230.

At a step 320, the control unit 240 obtains occupancy status data representing the occupancy status of the elevator car 110. The occupancy status of the elevator car 110 may for example be empty or occupied. The status of the elevator car 110 may be empty, for example if there are no objects, e.g. human objects (e.g. passengers or maintenance personnel, etc.) or non-human objects (e.g. load or animals, etc.) inside the elevator car 110. The status of the elevator car may be occupied, for example if there are one or more objects (either human or non-human objects) inside the elevator car 110. The control unit 240 may obtain the occupancy status data from the second sensor device 220. As discussed above, the second sensor device 220 may be the ToF sensor device arranged inside the elevator car 110. The occupancy status data obtained from the ToF sensor device 220 may comprise distance data. The ToF sensor device 220 comprises a light source, e.g. infrared (IR) light source, and an image sensor. The ToF sensor device 220 is configured to illuminate a scene, e.g. the interior of the elevator car 110, with the light source and to obtain the light reflected from scene with the image sensor. The ToF sensor device 220 may define the distance (from the ToF sensor device 220) to each point in the scene based on the reflected light. The distance data may comprise the distance to each point in the scene. Alternatively or in addition, the distance data may comprise three dimensional (3D) depth data formed based on the distance to each point in the scene. The 3D depth data may for example comprise a depth map or a point cloud data of the scene, i.e. the interior of the elevator car 110. For example, if there are one or more objects inside the elevator car 110, at least part of the light emitted from the light source of the ToF sensor device 220 is reflected from the one or more objects enabling that the one or more objects inside the elevator car 110 may be detected based in the distance data. Some advantages of using the ToF sensor device 220 to produce the occupancy status data of the elevator car 110 are discussed next. The ToF sensor device 220 is a substantially quick and may thus provide the occupancy status data in real-time. The data proved by the ToF sensor device 220 is non-intrusive data, which enables an improved privacy protection. The ToF sensor device 220 does not need ambient illumination for optimal performance, which in turn enables that the ToF sensor device 220 may also be used in low light or even in complete darkness. The ToF sensor device 220 is a low-cost sensor device and has a substantially simple structure. In the example of Figure 3, the step 310 of obtaining the door status data is performed before the step 320 of obtaining the occupancy status data, but the method is not limited to that, and the occupancy status data may be obtained before obtaining the door status data or the occupancy status data and the door status data may be obtained substantially simultaneously.

At a step 330, the control unit 240 detects based on the obtained door status data that the door of the elevator car 110 is closed. In case the obtained door status data comprises the status of the door of the elevator car 110 (e.g. if the door status data is obtained from the first sensor device 210 being the door sensor device or the elevator data acquisition device), the control unit 240 may detect based on the status of the door of the elevator car 110 comprised in the door status data whether the door of the elevator car 110 is closed or not. In case the obtained door status data comprises the acceleration of the elevator car 110 (e.g. if the door status data is obtained from the first sensor device 210 being the acceleration sensor device), the detecting that the door of the elevator car 110 is closed may for example comprise detecting an acceleration phase of an elevator ride of the elevator car 110 based on the acceleration of the elevator car 110. For example, the control unit 240 may detect when the acceleration of the elevator car 110 meets a predefined constant acceleration threshold to detect the acceleration phase of the elevator ride of the elevator car 110. During the acceleration phase of the elevator ride of the elevator car 110 the door of the elevator car 110 is most likely closed. Thus, the detection of the acceleration phase of the elevator car 110 indicates that the door of the elevator car 110 is closed. The predefined constant acceleration threshold may for example be a known threshold value or defined before implementation of the triggering system 200. Alternatively, in case the obtained door status data comprises the deceleration of the elevator car 110 (e.g. if the door status data is obtained from the first sensor device 210 being the acceleration sensor device), the detecting that the door of the elevator car 110 is closed may for example comprise detecting a deceleration phase of the elevator ride of the elevator car 110 based on the deceleration of the elevator car 110. For example, the control unit 240 may detect when the deceleration of the elevator car 110 meets a predefined constant deceleration threshold to detect the deceleration phase of the elevator ride of the elevator car 110. Similarly, as during the acceleration phase of the elevator ride of the elevator car 110, during the deceleration phase of the elevator ride of the elevator 110 the door of the elevator car 110 is most likely closed. Thus, the detection of the deceleration phase of the elevator car 110 indicates that the door of the elevator car 110 is closed. The predefined constant deceleration threshold may for example be a known threshold value or defined before implementation of the triggering system 200. The verb "meet" in context of a threshold (e.g. the predefined constant acceleration threshold and/or the predefined constant deceleration threshold) is used in this patent application to mean that a predefined condition is fulfilled. For example, the predefined condition may be that the predefined threshold is reached and/or exceeded. Alternatively, in case the obtained door status data comprises acceleration of the elevator car 110 and/or the deceleration of the elevator car 110 (e.g. if the door status data is obtained from the first sensor device 210 being the acceleration sensor device), the detecting that the door of the elevator car 110 is closed may comprise detecting a constant velocity phase of the elevator ride of the elevator car 110 based on the acceleration of the elevator car 110 or the deceleration of the elevator car 110. For example, the control unit 240 may detect the constant velocity phase of the elevator ride of the elevator car 110 by integrating the acceleration or the deceleration of the elevator car 110 to separate the constant velocity phase of the elevator ride of the elevator car 110 from a static phase of the elevator ride of the elevator car 110. During the constant velocity phase of the elevator ride of the elevator 110 the door of the elevator car 110 is most likely closed. Thus, the detection of the constant velocity phase of the elevator car 110 indicates that the door of the elevator car 110 is closed. The detection of the door status, i.e. that the door of the elevator car 110 is closed, based on the movement of the elevator car 110 (e.g. the acceleration of the elevator car 110 and/or the deceleration of the elevator car 110) is simpler than the detection of the door status for example based on analyzing image data obtained by the imaging device 230 from the elevator car 110. This is especially beneficial in third party elevator systems, where the door design may vary.

At a step 340, the control unit 240 detects based on the obtained occupancy status data that the elevator car 110 is empty. The detecting that the elevator car 110 is empty may for example comprise detecting based on the distance data whether there are any objects inside the elevator car 110 or not. The detection that there are no objects inside the elevator 110 indicates that the elevator car 110 is empty. For example, the detecting that elevator car 110 is empty based on the obtained distance data may comprise comparing the obtained distance data to reference distance data representing reference distance values of an empty elevator car 110. If the obtained distance data differs at least partly from the reference distance data, it may indicate that there are one or more objects inside the elevator car 110. For example, if the distance at least at some point(s) of the scene comprised in the obtained distance data differ from the reference distance values at the respective point(s) of the scene. Alternatively, if the obtained distance data corresponds substantially to the reference distance data, it may indicate that there are no objects inside the elevator car 110.

In the example of Figure 3, the step 330 of detecting that the door of the elevator car 110 is closed is performed after the step 320 of obtaining the occupancy status data and before the step 340 of detecting that the elevator car 110 is empty, but the method is not limited to that, and the step 330 of detecting that the door of the elevator car 110 is closed may be performed at any time after obtaining the door status data at the step 310 (e.g. immediately after obtaining the door status data or with a delay after obtaining the door status data) and the step 340 of detecting that the elevator car 110 is empty may be performed at any time after obtaining the occupancy status data at the step 320 (e.g. immediately after obtaining the occupancy status data or with a delay after obtaining the occupancy status data). The step 330 of detecting that the door of the elevator car 110 is closed may also be performed substantially simultaneously with the step 340 of detecting that the elevator car 110 is empty.

At a step 350, in response to the detecting that the door of the elevator car 110 is closed at the step 330 and that the elevator car 110 is empty at the step 340, the control unit 240 generates a control signal to the imaging device 230. The control signal comprises an instruction to trigger the acquisition of the image data of the empty elevator car 110. Because the control unit 240 has defined that the elevator car 110 is empty at the step 340 and that the door of the elevator car 110 is closed at the step 330 causing that any objects cannot enter the elevator car 110, the control unit 240 may conclude that it is an appropriate time for the imaging device 230 to provide the image data of the empty elevator car 110. The use of the triggering system 200 and the method discussed above improves the reliability that the image data may be provided from the empty elevator car 110. In other words, the triggering system 200 and the method discussed above improves the definition that the elevator car 110 is empty in order to trigger the acquisition of the image data of the empty elevator car 110.

In response to receiving the control signal from the control unit 240 the imaging device 230 may trigger the acquisition of the image data of the empty elevator car 110. The imaging device 230 may further provide the acquired image data of the empty elevator car 110 to the control unit 240. The control unit 240 may receive the acquired image data of the empty elevator car 110 at a step 360 from the imaging device 230. The control unit 240 may further update a baseline image of an image analysis -based detection algorithm based on the received image data at a step 370. If the received image data comprises one image of the empty elevator car 110, the control unit 240 may replace the previous baseline image with said one image comprised in the received image data. Alternatively, if the received image data comprises more than one image of the empty elevator car 110, the control unit 240 may calculate an average of the images to form an average image of the empty elevator car 110. The control unit 240 may further replace the previous baseline image with the formed average image of the empty elevator car 110. This improves the accuracy of the updated baseline image. The image analysis -based detection algorithm may for example be an elevator car fill level detection algorithm that may be used for defining the fill level of the elevator car 110. The image analysis -based detection algorithm may be based on using the baseline image of the empty elevator car 110. For example, in the elevator car fill level detection algorithm the fill level of the elevator car 110 may be defined by comparing an image difference between at least one image of the interior of the elevator car 110 captured with the imaging device 230, when the elevator car 110 is assumed to be filled with passengers and/or load, and the baseline image. Thus, it is important to keep the baseline image frequently refreshed (i.e. updated). The use of the triggering system 200 and the method for triggering the acquisition of the image data of the empty elevator car 110 enables concluding the appropriate time for the imaging device 230 to acquire the image data of the empty elevator car 110 (i.e. when the elevator car 110 is empty and that the door of the elevator car 110 is closed causing that any objects cannot enter the elevator car 110) to be used for updating the baseline image. This improves the accuracy of the baseline image and thus also the accuracy of the image analysis -based detection algorithm.

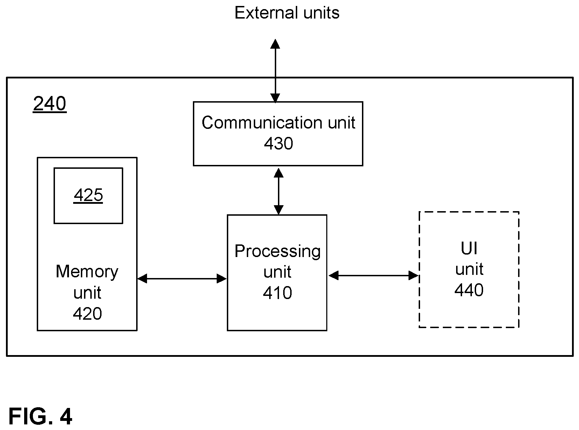

Figure 4 illustrates schematically an example of components of the control unit 240. The control unit 240 may comprise a processing unit 410 comprising one or more processors, a memory unit 420 comprising one or more memories, a communication unit 430 comprising one or more communication devices, and possibly a user interface (UI) unit 440. The mentioned elements may be communicatively coupled to each other with e.g. an internal bus. The memory unit 420 may store and maintain portions of a computer program (code) 425, the obtained door status data, the obtained occupation status data, the acquired image data, the baseline image, and any other data. The computer program 425 may comprise instructions which, when the computer program 425 is executed by the processing unit 410 of control unit 240 may cause the processing unit 410, and thus the control unit 240 to carry out desired tasks, e.g. one or more of the method steps described above described above. The processing unit 410 may thus be arranged to access the memory unit 420 and retrieve and store any information therefrom and thereto. For sake of clarity, the processor herein refers to any unit suitable for processing information and control the operation of the control unit 240, among other tasks. The operations may also be implemented with a microcontroller solution with embedded software. Similarly, the memory unit 420 is not limited to a certain type of memory only, but any memory type suitable for storing the described pieces of information may be applied in the context of the present invention. The communication unit 430 provides one or more communication interfaces for communication with any other unit, e.g. the first sensor device 210, the second sensor device 220, the imaging device 230, the elevator control system 130, one or more databases, or with any other unit. The user interface unit 440 may comprise one or more input/output (I/O) devices, such as buttons, key-board, touch screen, microphone, loudspeaker, display and so on, for receiving user input and outputting information. The computer program 425 may be a computer program product that may be comprised in a tangible nonvolatile (non-transitory) computer-readable medium bearing the computer program code 425 embodied therein for use with a computer, i.e. the control unit 240.

The specific examples provided in the description given above should not be construed as limiting the applicability and/or the interpretation of the appended claims. Lists and groups of examples provided in the description given above are not exhaustive unless otherwise explicitly stated.

## Claims

1. A method for triggering an acquisition of image data of an empty elevator car (110), the method comprising
obtaining (310) door status data representing a status of the door of the elevator car (110),
obtaining (320) occupancy status data representing an occupancy status of the elevator car (110),
detecting (330) based on the obtained door status data that the door of the elevator car (110) is closed,
detecting (340) based on the obtained occupancy status data that the elevator car (110) is empty, and **characterized by**
generating (350) a control signal to an imaging device (230) arranged inside the elevator car (110) in response to the detecting that the door of the elevator car (110) is closed and the elevator car (110) is empty, wherein the control signal comprises an instruction to trigger the acquisition of the image data of the empty elevator car (110).

2. The method according to claim 1, wherein the door status data is obtained from a first sensor device (210) being an acceleration sensor device arranged to the elevator car (110), and wherein the door status data comprises acceleration of the elevator car (110) or deceleration of the elevator car (110).

3. The method according to claim 2, wherein the detecting that the door of the elevator car (110) is closed comprises:
detecting an acceleration phase of an elevator ride of the elevator car (110) based on the acceleration of the elevator car (110), wherein the detection of the acceleration phase of the elevator car (110) indicates that the door of the elevator car (110) is closed; or
detecting a deceleration phase of the elevator ride of the elevator car (110) based on the deceleration of the elevator car (110), wherein the detection of the deceleration phase of the elevator car (110) indicates that the door of the elevator car (110) is closed.

4. The method according to claim 2, wherein the detecting that the door of the elevator car (110) is closed comprises detecting a constant velocity phase of an elevator ride of the elevator car (110) based on the acceleration of the elevator car (110) or the deceleration of the elevator car (110), wherein the detection of the constant velocity phase of the elevator car (110) indicates that the door of the elevator car (110) is closed.

5. The method according to any of the preceding claims, wherein the occupancy status data is obtained from a second sensor device (220) being a Time-of-Flight (ToF) sensor device arranged inside the elevator car (110), and wherein the occupancy status data comprises distance data.

6. The method according to claim 5, wherein the detecting that the elevator car (110) is empty comprises detecting based on the distance data whether there are any objects inside the elevator car (110) or not, wherein the detection that there are no objects inside the elevator car (110) indicates that the elevator car (110) is empty.

7. The method according to any of the preceding claims, further comprising:
receiving (360) the acquired image data of the empty elevator car (110), and
updating (370) a baseline image of an image analysis -based detection algorithm based on the received image data.

8. A triggering system (200) for triggering an acquisition of image data of an empty elevator car (110), the triggering system (200) comprises:
a first sensor device (210) configured to provide door status data representing a status of the door of the elevator car (110),
a second sensor device (220) configured to provide occupancy status data representing occupancy status of the elevator car (110),
an imaging device (230) arranged inside the elevator car (110) and configured to acquire image data of the interior of the elevator car (110), and **characterized by**
a control unit (240) configured to:
obtain the door status data from the first sensor device (210),
obtaining the occupancy status data from the second sensor device (220),
detect based on the obtained door status data that the door of the elevator car (110) is closed,
detect based on the obtained occupancy status data that the elevator car (110) is empty, and
generate a control signal to the imaging device (230) in response to the detecting that the door of the elevator car (110) is closed and the elevator car (110) is empty, wherein the control signal comprises an instruction to trigger the acquisition of the image data of the empty elevator car (110).

9. The triggering system (200) according to claim 8, wherein the first sensor device (210) is an acceleration sensor device arranged to the elevator car (110), and wherein the door status data comprises acceleration of the elevator car (110) or deceleration of the elevator car (110).

10. The triggering system (200) according to claim 9, wherein the detecting that the door of the elevator car (110) is closed comprises that the control unit (240) is configured to:
detect an acceleration phase of an elevator ride of the elevator car (110) based on the acceleration of the elevator car (110), wherein the detection of the acceleration phase of the elevator car (110) indicates that the door of the elevator car (110) is closed; or
detect a deceleration phase of the elevator ride of the elevator car (110) based on the deceleration of the elevator car (110), wherein the detection of the deceleration phase of the elevator car (110) indicates that the door of the elevator car (110) is closed.

11. The triggering system (200) according to claim 9, wherein the detecting that the door of the elevator car (110) is closed comprises that the control unit (240) is configured to: detect a constant velocity phase of an elevator ride of the elevator car (110) based on the acceleration of the elevator car (110) or the deceleration of the elevator car (100), wherein the detection of the constant velocity phase of the elevator car (110) indicates that the door of the elevator car (110) is closed.

12. The triggering system (200) according to any of claims 8 to 11, wherein the second sensor device (220) is a Time-of-Flight (ToF) sensor device arranged inside the elevator car (110), and wherein the occupancy status data comprises distance data.

13. The triggering system (200) according to claim 12, wherein the detecting that the elevator car (110) is empty comprises that the control unit (240) is configured to detect based on the distance data whether there are any objects inside the elevator car (110) or not, wherein the detection that there are no objects inside the elevator car (110) indicates that the elevator car (110) is empty.

14. The triggering system (200) according to any of claims 8 to 13, wherein the control unit (240) is further configured to:
receive the acquired image data of the empty elevator car (110) from the imaging device (230), and
update a baseline image of an image analysis -based detection algorithm based on the received image data.

15. An elevator system (100) comprising:
at least one elevator car (110) configured to travel along a respective elevator shaft (120), and
a triggering system (200) according to any of claims 8 to 14.

## Patentansprüche

1. Verfahren zum Auslösen einer Erfassung von Bilddaten einer leeren Aufzugskabine (110), das Verfahren umfassend Erhalten (310) von Türstatusdaten, die einen Status der Tür der Aufzugskabine (110) darstellen,
Erhalten (320) von Belegungsstatusdaten, die einen Belegungsstatus der Aufzugskabine (110) darstellen, Erfassen (330) basierend auf den erhaltenen Türstatusdaten, dass die Tür der Aufzugskabine (110) geschlossen ist,
Erfassen (340) basierend auf den erhaltenen Belegungsstatusdaten, dass die Aufzugskabine (110) leer ist, und **gekennzeichnet durch**
Erzeugen (350) eines Steuersignals für eine innerhalb der Aufzugskabine (110) angeordnete bildgebende Vorrichtung (230) als Reaktion auf das Erfassen, dass die Tür der Aufzugskabine (110) geschlossen und die Aufzugskabine (110) leer ist, wobei das Steuersignal eine Anweisung zum Auslösen der Erfassung der Bilddaten der leeren Aufzugskabine (110) umfasst.

2. Verfahren nach Anspruch 1, wobei die Türzustandsdaten von einer ersten Sensorvorrichtung (210) erhalten werden, bei der es sich um eine an der Aufzugskabine (110) angeordnete Beschleunigungssensorvorrichtung handelt, und wobei die Türzustandsdaten eine Beschleunigung der Aufzugskabine (110) oder eine Verzögerung der Aufzugskabine (110) umfassen.

3. Verfahren nach Anspruch 2, wobei das Erfassen, dass die Tür der Aufzugskabine (110) geschlossen ist, Folgendes umfasst:
Erfassen einer Beschleunigungsphase einer Aufzugfahrt der Aufzugskabine (110) basierend auf der Beschleunigung der Aufzugskabine (110), wobei die Erfassung der Beschleunigungsphase der Aufzugskabine (110) angibt, dass die Tür der Aufzugskabine (110) geschlossen ist; oder
Erfassen einer Verzögerungsphase der Aufzugfahrt der Aufzugskabine (110) basierend auf der Verzögerung der Aufzugskabine (110), wobei das Erfassen der Verzögerungsphase der Aufzugskabine (110) angibt, dass die Tür der Aufzugskabine (110) geschlossen ist.

4. Verfahren nach Anspruch 2, wobei das Erfassen, dass die Tür der Aufzugskabine (110) geschlossen ist, das Erfassen einer Phase konstanter Geschwindigkeit einer Aufzugsfahrt der Aufzugskabine (110) basierend auf der Beschleunigung der Aufzugskabine (110) oder der Verzögerung der Aufzugskabine (110) umfasst, wobei die Erfassung der Phase konstanter Geschwindigkeit der Aufzugskabine (110) anzeigt, dass die Tür der Aufzugskabine (110) geschlossen ist.

5. Verfahren nach einem der vorstehenden Ansprüche, wobei die Belegungszustandsdaten von einer zweiten Sensorvorrichtung (220) erhalten werden, bei der es sich um eine im Inneren der Aufzugskabine (110) angeordnete Flugzeitsensorvorrichtung (ToF) handelt, und wobei die Belegungszustandsdaten Abstandsdaten umfassen.

6. Verfahren nach Anspruch 5, wobei das Erfassen, dass die Aufzugskabine (110) leer ist, das Erfassen basierend auf den Entfernungsdaten umfasst, ob sich irgendwelche Objekte innerhalb der Aufzugskabine (110) befinden oder nicht, wobei die Erfassung, dass sich keine Objekte innerhalb der Aufzugskabine (110) befinden, anzeigt, dass die Aufzugskabine (110) leer ist.

7. Verfahren nach einem der vorstehenden Ansprüche, ferner umfassend:
Empfangen (360) der erfassten Bilddaten der leeren Aufzugskabine (110), und
Aktualisieren (370) eines Basisbildes eines auf Bildanalyse basierenden Erfassungsalgorithmus basierend auf den empfangenen Bilddaten.

8. Auslösesystem (200) zum Auslösen einer Erfassung von Bilddaten einer leeren Aufzugskabine (110), das Auslösesystem (200) umfassend:
eine erste Sensorvorrichtung (210), die konfiguriert ist, um Türstatusdaten bereitzustellen, die einen Status der Tür der Aufzugskabine (110) darstellen,
eine zweite Sensorvorrichtung (220), die konfiguriert ist, um Belegungsstatusdaten bereitzustellen, die den Belegungsstatus der Aufzugskabine (110) darstellen,
eine bildgebende Vorrichtung (230), die innerhalb der Aufzugskabine (110) angeordnet ist und konfiguriert ist, um Bilddaten des Innenraums der Aufzugskabine (110) zu erfassen, und **gekennzeichnet durch**
eine Steuereinheit (240), die konfiguriert ist zum:
Erhalten der Türstatusdaten von der ersten Sensorvorrichtung (210),
Erhalten der Belegungsstatusdaten von der zweiten Sensorvorrichtung (220)
Erfassen basierend auf den erhaltenen Türstatusdaten, dass die Tür der Aufzugskabine (110) geschlossen ist,
Erfassen basierend auf den erhaltenen Belegungsstatusdaten, dass die Aufzugskabine (110) leer ist, und
Erzeugen eines Steuersignals an die bildgebende Vorrichtung (230) als Reaktion auf die Erkennung, dass die Tür der Aufzugskabine (110) geschlossen ist und die Aufzugskabine (110) leer ist, wobei das Steuersignal eine Anweisung zum Auslösen der Erfassung der Bilddaten der leeren Aufzugskabine (110) umfasst.

9. Auslösesystem (200) nach Anspruch 8, wobei die erste Sensorvorrichtung (210) eine Beschleunigungssensorvorrichtung ist, die an der Aufzugskabine (110) angeordnet ist, und wobei die Türzustandsdaten die Beschleunigung der Aufzugskabine (110) oder die Verzögerung der Aufzugskabine (110) umfassen.

10. Auslösesystem (200) nach Anspruch 9, wobei das Erfassen, dass die Tür der Aufzugskabine (110) geschlossen ist, umfasst, dass die Steuereinheit (240) konfiguriert ist zum:
Erfassen einer Beschleunigungsphase einer Aufzugfahrt der Aufzugskabine (110) basierend auf der Beschleunigung der Aufzugskabine (110), wobei die Erfassung der Beschleunigungsphase der Aufzugskabine (110) angibt, dass die Tür der Aufzugskabine (110) geschlossen ist; oder
Erfassen einer Verzögerungsphase der Aufzugfahrt der Aufzugskabine (110) basierend auf der Verzögerung der Aufzugskabine (110), wobei das Erfassen der Verzögerungsphase der Aufzugskabine (110) angibt, dass die Tür der Aufzugskabine (110) geschlossen ist.

11. Auslösesystem (200) nach Anspruch 9, wobei das Erfassen, dass die Tür der Aufzugskabine (110) geschlossen ist, umfasst, dass die Steuereinheit (240) konfiguriert ist zum: Erfassen einer Phase konstanter Geschwindigkeit einer Aufzugsfahrt der Aufzugskabine (110) basierend auf der Beschleunigung der Aufzugskabine (110) oder der Verzögerung der Aufzugskabine (100), wobei die Erkennung der konstanten Geschwindigkeitsphase der Aufzugskabine (110) als Angabe dient, dass die Tür der Aufzugskabine (110) geschlossen ist.

12. Auslösesystem (200) nach einem der Ansprüche 8 bis 11, wobei die zweite Sensorvorrichtung (220) eine innerhalb der Aufzugskabine (110) angeordnete Laufzeitsensorvorrichtung (ToF) ist und wobei die Belegungsstatusdaten Entfernungsdaten umfassen.

13. Auslösesystem (200) nach Anspruch 12, wobei das Erfassen, dass die Aufzugskabine (110) leer ist, umfasst, dass die Steuereinheit (240) konfiguriert ist, um basierend auf den Abstandsdaten zu erfassen, ob sich irgendwelche Objekte innerhalb der Aufzugskabine (110) befinden oder nicht, wobei die Erfassung, dass sich keine Objekte innerhalb der Aufzugskabine (110) befinden, anzeigt, dass die Aufzugskabine (110) leer ist.

14. Auslösesystem (200) nach einem der Ansprüche 8 bis 13, wobei die Steuereinheit (240) ferner konfiguriert ist zum:
Empfangen der erfassten Bilddaten der leeren Aufzugskabine (110) von der bildgebenden Vorrichtung (230), und
Aktualisieren eines Basisbildes eines auf Bildanalyse basierenden Erkennungsalgorithmus basierend auf den empfangenen Bilddaten.

15. Aufzugssystem (100), umfassend:
mindestens eine Aufzugskabine (110), die konfiguriert ist, um entlang eines entsprechenden Aufzugsschachts (120) zu fahren, und
ein Auslösesystem (200) nach einem der Ansprüche 8 bis 14.

## Revendications

1. Procédé de déclenchement d'une acquisition de données d'image d'une cabine d'ascenseur vide (110), le procédé comprenant
l'obtention (310) de données d'état de porte représentant un état de la porte de la cabine d'ascenseur (110), l'obtention (320) de données d'état d'occupation représentant un état d'occupation de la cabine d'ascenseur (110),
la détection (330), sur la base des données d'état de porte obtenues, que la porte de la cabine d'ascenseur (110) est fermée,
la détection (340), sur la base des données d'état d'occupation obtenues, que la cabine d'ascenseur (110) est vide, et **caractérisé par**
la génération (350) d'un signal de commande vers un dispositif d'imagerie (230) agencé à l'intérieur de la cabine d'ascenseur (110) en réponse à la détection que la porte de la cabine d'ascenseur (110) est fermée et que la cabine d'ascenseur (110) est vide, dans lequel le signal de commande comprend une instruction pour déclencher l'acquisition des données d'image de la cabine d'ascenseur vide (110).

2. Procédé selon la revendication 1, dans lequel les données d'état de porte sont obtenues à partir d'un premier dispositif de capteur (210) qui est un dispositif de capteur d'accélération agencé sur la cabine d'ascenseur (110), et dans lequel les données d'état de porte comprennent l'accélération de la cabine d'ascenseur (110) ou la décélération de la cabine d'ascenseur (110).

3. Procédé selon la revendication 2, dans lequel la détection que la porte de la cabine d'ascenseur (110) est fermée comprend :
la détection d'une phase d'accélération d'un trajet d'ascenseur de la cabine d'ascenseur (110) sur la base de l'accélération de la cabine d'ascenseur (110), dans lequel la détection de la phase d'accélération de la cabine d'ascenseur (110) indique que la porte de la cabine d'ascenseur (110) est fermée ; ou
la détection d'une phase de décélération du trajet d'ascenseur de la cabine d'ascenseur (110) sur la base de la décélération de la cabine d'ascenseur (110), dans lequel la détection de la phase de décélération de la cabine d'ascenseur (110) indique que la porte de la cabine d'ascenseur (110) est fermée.

4. Procédé selon la revendication 2, dans lequel la détection que la porte de la cabine d'ascenseur (110) est fermée comprend la détection d'une phase de vitesse constante d'un trajet d'ascenseur de la cabine d'ascenseur (110) sur la base de l'accélération de la cabine d'ascenseur (110) ou de la décélération de la cabine d'ascenseur (110), dans lequel la détection de la phase de vitesse constante de la cabine d'ascenseur (110) indique que la porte de la cabine d'ascenseur (110) est fermée.

5. Procédé selon l'une quelconque des revendications précédentes, dans lequel les données d'état d'occupation sont obtenues à partir d'un second dispositif de capteur (220) qui est un dispositif de capteur de temps de vol (ToF) agencé à l'intérieur de la cabine d'ascenseur (110), et dans lequel les données d'état d'occupation comprennent des données de distance.

6. Procédé selon la revendication 5, dans lequel la détection que la cabine d'ascenseur (110) est vide comprend le fait de détecter, sur la base des données de distance, s'il y a des objets à l'intérieur de la cabine d'ascenseur (110) ou non, dans lequel la détection qu'il n'y a pas d'objets à l'intérieur de la cabine d'ascenseur (110) indique que la cabine d'ascenseur (110) est vide.

7. Procédé selon l'une quelconque des revendications précédentes, comprenant en outre :
la réception (360) des données d'image acquises de la cabine d'ascenseur vide (110), et
la mise à jour (370) d'une image de base d'un algorithme de détection basé sur l'analyse d'image sur la base des données d'image reçues.

8. Système de déclenchement (200) pour déclencher une acquisition de données d'image d'une cabine d'ascenseur vide (110), le système de déclenchement (200) comprend :
un premier dispositif de capteur (210) configuré pour fournir des données d'état de porte représentant un état de la porte de la cabine d'ascenseur (110),
un second dispositif de capteur (220) configuré pour fournir des données d'état d'occupation représentant l'état d'occupation de la cabine d'ascenseur (110),
un dispositif d'imagerie (230) agencé à l'intérieur de la cabine d'ascenseur (110) et configuré pour acquérir des données d'image de l'intérieur de la cabine d'ascenseur (110), et **caractérisé par**
une unité de commande (240) configurée pour :
obtenir les données d'état de porte à partir du premier dispositif de capteur (210),
obtenir les données d'état d'occupation à partir du second dispositif de capteur (220),
détecter, sur la base des données d'état de porte obtenues, que la porte de la cabine d'ascenseur (110) est fermée,
détecter, sur la base des données d'état d'occupation obtenues, que la cabine d'ascenseur (110) est vide, et
générer un signal de commande vers le dispositif d'imagerie (230) en réponse à la détection que la porte de la cabine d'ascenseur (110) est fermée et que la cabine d'ascenseur (110) est vide, dans lequel le signal de commande comprend une instruction pour déclencher l'acquisition des données d'image de la cabine d'ascenseur vide (110).

9. Système de déclenchement (200) selon la revendication 8, dans lequel le premier dispositif de capteur (210) est un dispositif de capteur d'accélération agencé sur la cabine d'ascenseur (110), et dans lequel les données d'état de porte comprennent l'accélération de la cabine d'ascenseur (110) ou la décélération de la cabine d'ascenseur (110).

10. Système de déclenchement (200) selon la revendication 9, dans lequel la détection que la porte de la cabine d'ascenseur (110) est fermée comprend que l'unité de commande (240) est configurée pour :
détecter une phase d'accélération d'un trajet d'ascenseur de la cabine d'ascenseur (110) sur la base de l'accélération de la cabine d'ascenseur (110), dans lequel la détection de la phase d'accélération de la cabine d'ascenseur (110) indique que la porte de la cabine d'ascenseur (110) est fermée ; ou
détecter une phase de décélération du trajet d'ascenseur de la cabine d'ascenseur (110) sur la base de la décélération de la cabine d'ascenseur (110), dans lequel la détection de la phase de décélération de la cabine d'ascenseur (110) indique que la porte de la cabine d'ascenseur (110) est fermée.

11. Système de déclenchement (200) selon la revendication 9, dans lequel la détection que la porte de la cabine d'ascenseur (110) est fermée comprend que l'unité de commande (240) est configurée pour : détecter une phase de vitesse constante d'un trajet d'ascenseur de la cabine d'ascenseur (110) sur la base de l'accélération de la cabine d'ascenseur (110) ou de la décélération de la cabine d'ascenseur (100), dans lequel la détection de la phase de vitesse constante de la cabine d'ascenseur (110) indique que la porte de la cabine d'ascenseur (110) est fermée.

12. Système de déclenchement (200) selon l'une quelconque des revendications 8 à 11, dans lequel le second dispositif de capteur (220) est un dispositif de capteur de temps de vol (ToF) agencé à l'intérieur de la cabine d'ascenseur (110), et dans lequel les données d'état d'occupation comprennent des données de distance.

13. Système de déclenchement (200) selon la revendication 12, dans lequel la détection que la cabine d'ascenseur (110) est vide comprend que l'unité de commande (240) est configurée pour détecter, sur la base des données de distance, s'il y a des objets à l'intérieur de la cabine d'ascenseur (110) ou non, dans lequel la détection qu'il n'y a pas d'objets à l'intérieur de la cabine d'ascenseur (110) indique que la cabine d'ascenseur (110) est vide.

14. Système de déclenchement (200) selon l'une quelconque des revendications 8 à 13, dans lequel l'unité de commande (240) est en outre configurée pour :
recevoir les données d'image acquises de la cabine d'ascenseur vide (110) à partir du dispositif d'imagerie (230), et
mettre à jour une image de base d'un algorithme de détection basé sur l'analyse d'image sur la base des données d'image reçues.

15. Système d'ascenseur (100) comprenant :
au moins une cabine d'ascenseur (110) configurée pour se déplacer le long d'une cage d'ascenseur respective (120), et
un système de déclenchement (200) selon l'une quelconque des revendications 8 à 14.
